# EUROPEAN PATENT SPECIFICATION

(11) **EP 0 582 204 B1**
(45) Date of publication and mention of the grant of the patent: **13.03.1996**
(21) Application number: 93112100.8
(22) Date of filing: 29.07.1993
(51) Int. Cl.: B64F 1/22

(54) **Aircraft tractor**
Schleppfahrzeug für Flugzeuge
Véhicule tracteur pour avion

(30) Priority: 03.08.1992 IT GE920085
(43) Date of publication of application: 09.02.1994
(73) Proprietor: FRESIA S.p.A., I-17017 Millesimo (SV) (IT)
(72) Inventor: Fresia, Giulio, I-17017 Millesimo (SV) (IT)
(74) Representative: Ferrarotti, Giovanni

(56) References cited:
- EP-A- 0 309 760
- WO-A-89/00937
- WO-A-89/08583
- WO-A-90/02080

## Description

This invention covers a tractor for towing aicraft through their central steering front wheels.

Several types of vehicles are known to tow airplanes, but they all have some drawbacks and defects.

For instance, US-A-2987133 illustrates a towing vehicle provided with a long rotating framework, the free end of which is fitted with two wheels driven by the framework and a system connecting the wheels of the aircraft to the shaft.

The wheels rotating in touch with the aircraft wheels cause the aircraft to move. This solution is rather complicated, its functioning is uncertain and requires complex coupling and hooking up operations.

Other solutions, such as US-A-3025922 and DE-A-2826161 are known consisting in a device like a motor-driven hoe provided with a motorized roller in contact with one wheel of the airplane. Obviously, these solutions can only be used for moving small and light aircraft.

US-A-3005510 is also known and features a special wedge and motor-driven belt to be inserted between the wheel sets of the aircraft. However, this solution can usually not he used on normal air liners.

Finally EP-A-0156842 is known, grouping two original Finnish Patents FI-A-75310 and FI-A-78426. This document describes a trolley with a recessed central zone in which the lateral non-steering wheel or wheels of the aircraft may penetrate. This trolley is provided with mobile rollers moving in transverse vertical as well as in horizontal lengthwise direction so that they may be lifted or placed adjacent in front of or behind the wheels of the aircraft. At least one of these rollers is motor-driven and will drive the non-steering wheel or set of lateral wheels of the plane.

But even the latter solution has some drawbacks. The trolley being without driving wheels, has to be driven by an automotive vehicle The rollers in contact with the lateral wheels of the aircraft are rather small, with little towing friction and there are no means to ensure a stable lateral support for the wheels of the airplane.

These rollers are supported at one side only by the bearing frame so that they may get warped and deviated from their direction of motion. The above described towing device is applied to the lateral non-steering wheels or the airplane, so that the pilot has to steer the plane during towing or any other persons shall move the steering wheels of the aircraft with the aid of proper equipment.

The above front and rear rollers are controlled by one single mechanism that will approach them to grip the airplane wheels, so that the docking manoeuvre takes much time and is difficult.

Recently, equipment described in the above mentioned EP-A-0156842 was mounted on a tractor, but the drawbacks still remain.

Besides there are known WO-A-8 908 583 and WO-A-9 002 080, in which it appears a transfer device that will grip double wheels of an aircraft, which transfer device includes a fork-shaped frame and pairs of roller attached to both forks. These forks are connected to the frame by means of parallelogram arms which are adapted to provide the rollers with lateral movement required when being placed round double wheels of the aircraft. According to WO-A-8 900 937 it is known a vehicle moving apparatus, which comprises counter-rotating wheels and rollers having spaced axes to enable the rollers to engage a peripheral surface of a vehicle wheels, with the wheels in ground contact.

According to EP-A-0 309 760 it is known a tractor provided with plates presenting rollers which are articulated for containing the wheels of a vehicle.

This invention has the aim to provide a tractor for towing aircraft, apt to meet all requirements, including those of large aircraft, towing them through the, usually double, front steering wheels of the planes.

This automotive towing tractor is fitted with a front operating cab and it features a rear recess which can lodge the front steering wheels of the airplane. Two first motor-driven rollers rotating on a lengthwise mobile transverse axle by means of a hydraulic fluid powered piston are located in the front part of this recess; these rollers will adjust the contact pressure on variously sized aircraft wheels.

Two more independent second motor-driven wheels located in the rear part of the recess are revolving on vertical axles both either converging towards the center or diverging sideways; this second set of rollers are resting on the rear end of the steering wheels of the aircraft. The rotatory movement of these second rear rollers is caused by hydraulic fluid powered pistons and, possible, by traces which will permit to adjust the distance between the front and rear rollers according to the wheel diameter of the aircraft.

The fact that the tractor in question permits the transverse axle of the tractor rear wheels always to coincide on the same vertical transverse plane with the transverse axle of the aircraft wheels, by means of the traces e.g., is particularly interesting, since this coincidence is essential for correct steering of the airplane and of the tractor.

The first and second roller set are largely dimensioned and have an excellent sliding contact with the aircraft wheels.

Various control and adjustment devices as described hereinafter, will ensure efficient operation of the tractor in question and a well balanced gripping and towing action of the front and rear rollers on the aircraft wheels.

The invention is question is illustrated for exemplification purposes in its two main variants, in the four enclosed drawings sheets, in which:

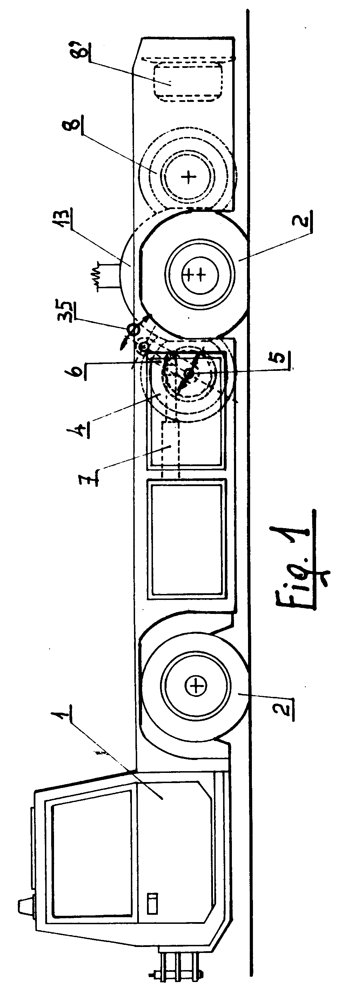

Fig 1 shows a lateral view of the aircraft towing tractor with adjustment of the distance between rollers;
Fig. 2 shows a partial top view of the rear part of the tractor illustrated in fig.1;
Fig.3 shows a rear view of the tractor illustrated in fig.1;
Fig. 4 shows a partial top view of the rear part of the tractor without adjustment of the distance between rollers;
Fig.5 shows a rear view of the tractor illustrated in fig.4;
Fig. 6 shows an elementary operating diagram of the tractor illustrated in fig.1.

With reference to these figures, 1 indicates the tractor provided with two driving and steering wheels 2, presenting a front operating cab and featuring a rear large recess 3. Two first motor-driven rollers 4 mounted on one single transverse horizontal axle 5, oscillating lengthwise with respect to the towing vehicle by means of a lever 6 actuated by a hydraulic fluid powered piston 7.

The rear part of the recess 3 houses two second motor-driven rollers 8 mounted on their transverse axles and separately rotating by means of arms 9 controlled by hydraulic fluid powered pistons 10, on vertical axles 11 from a central position 8 to a lateral position 8' and vice-versa.

All these rollers 4 and 8 are internally fitted with flat-shaped surfaces 12 for guiding and centering the steering front wheels 13 of the aircraft. Operation of the above described tractor is quite clear: by backing , the tractor is approached to the aircraft until the first roller set 4 is in touch with the aircraft wheels 13.

Then, the rear rollers 8 are closed so that the wheels of the airplane remain captured between the rollers 4 and 8.

Since the tractor 1 is acting on the front steering wheels 13 of the aircraft, the transverse axle of the tractor rear wheels 2 shall coincide on the transverse vertical plane containing the transverse axle of the aircraft wheels 13 so as to facilitate the combined steering of the tractor and aircraft without wheel slip.

This is achieved by a device regulating the longitudinal position of the rear rollers 8. The axis 11 and the dynamic fluid powered piston 10 supporting and rotating these rear rollers 8 are mounted on a mobile rod 14 moving lengthwise to the tractor by means of traces 15, 16 and a hydraulic fluid powered piston 17.

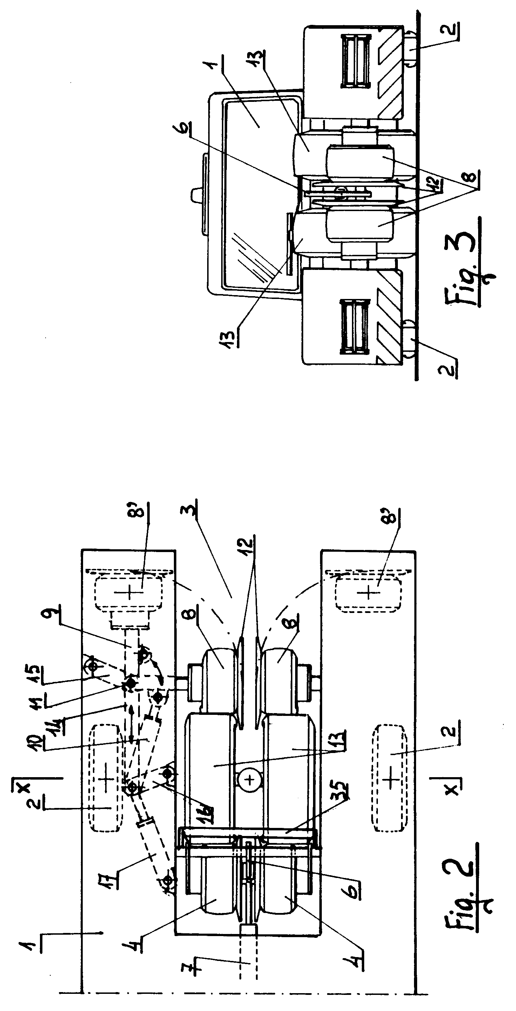

Coincidence of the transverse axles of the rear wheels 2 of the tractor 1 with the front wheels 13 of the aircraft on the same transverse vertical plane X-X is achieved by operating pistons 17 positioning the rear rollers 8 , and by actuating the piston 7 positioning the front rollers 4 . This is illustrated in fig. 2 and 6. .

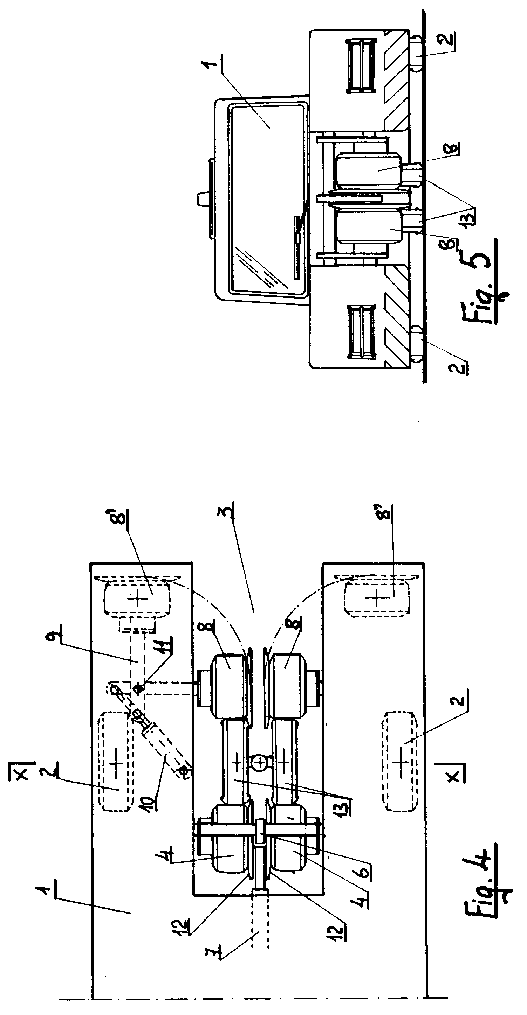

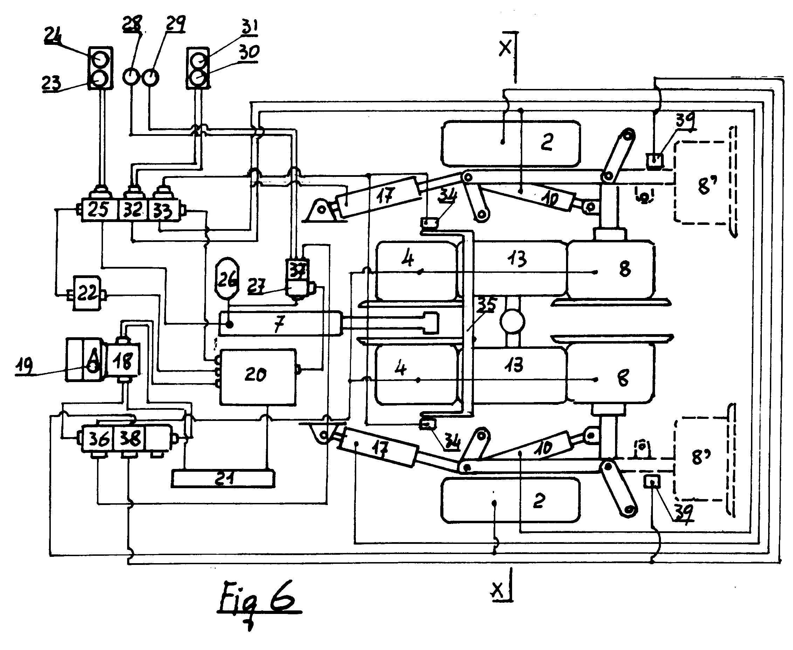

However, if the tractor is designed for the front wheels of a given aircraft only, without adjustment of the longitudinal distance between the rollers, it will be possible to adopt the solutions illustrated in fig. 4 and 5, which do not allow for longitudinal movement of the rear rollers 8.

With reference to fig. 6, the following components are shown in addition to those already described:
- a variable displacement hydraulic motor 18 and its speed control lever 19;
- an oil tank 20 and its cooling radiator 21;
- an oil gear pump 22
- pushbuttons 23, 24 controlling the distributor 25 actuating the single acting piston 7 preloading the front rollers 4;
- a nitrogen bell 26 connected to piston 7;
- a solenoid valve 27 adjusting the working pressure of the front rollers 4;
- a red warning light 28 enabling operation of the tractor wheels 2,
- a green warning lamp enabling operation of the rollers 4, 8,
- pushbuttons 30, 31 actuating the distributor 32 controlling the double-acting pistons 10 for rotation of the rear rollers 8;
- a distributor 33 actuating the double-acting pistons 17 for longitudinal movement of the rear rollers 8;
- microswitches 34 actuated by an oscillating bar 35 and connected to the distributor 33; this oscillating bar 35 is resting on the aircraft wheels and is lifted or lowered if the wheel diameter is other than defined by the rollers for coincidence of the tractor rear wheel axles with the aircraft wheels on the same vertical transverse plane X-X; oscillation of the bar 35 by means of the microswitches 34, the distributor 33 and the piston 17 will automatically cause new positioning of the rollers and adjust the distance between them;
- a solenoid valve 36 connected by a pressure switch to the warning lamps 28, 29 to actuate or inhibit operation of the rollers 4, 8;
- a solenoid valve 38 controlling the wheels 2 of the tractor 1 enabled by the micro-switches 39 triggered by the rotating movement of the arms 9 supporting the rear rollers 8.

Based upon the foregoing, it is clear that the operation is performed in four steps, three of which regarding docking and towing whereas the fourth step concerns release:

### First step-

- The operator moves the tractor in reverse to insert the front steering wheels 13 of the aircraft in the recess 3, until these wheels are resting against the front wheels 4 of the tractor 1;
- The operator then presses the push-button 31 controlling the distributor 32 acting on the pistons 10 driving the rotating rear wheels 8' until they reach their central position 8. By means of the solenoid 38, the microswitches 39 inhibit the operation of the tractor wheels 2. The piston 7 controlled bell 26 permits to adjust the front rollers 4 so that the axle of the aircraft wheels 13 will be placed on the same vertical transverse plane X-X as the transverse axle of the tractor wheels 2.

### Second step

- The operator presses the pushbutton 23 to open the distributor 25, powering the piston 7 for preloading of the rollers 4, 8 sideways of the aircraft wheels 13, while the pressure is adjusted by the valve 27.
- At the same time, the pressure switch 37 actuates the solenoid valve 36 connecting the hydraulic motors driving the rollers 4,8. The lamp 29 will light up and the lamp 28 is turned off;
- the tractor 1 is ready for towing.

### Third step

The towing speed is determined by acting on the lever 19 of the hydraulic motor 18. After the speed has been set, the heat engine of the tractor (not shown in the drawings) is activated for a gradual starting up until the required speed is reached.

To stop towing, the operator will no longer press the accelerator and will act on the brakes if needed.

### Fourth step

- After towing, the tractor has to be hooked off. The operator will press the pushbutton 23 to discharge the piston 7 and the pushbutton 30 controlling the distributor 32 which is acting on the pistons 10 that will open the rollers 8 in their position 8'.
- At the same time, the pressure switch 37 will discharge the valve 36 thus inhibiting operation of the rollers 4, 8 while the micro-switches 39 will actuate the valve 38 controlling the tractor wheels 2. The warning light 29 is turned off and the lamp 28 will light up.
- The uncoupled tractor can now resume its normal operation.

The tractor described herein may be used for towing of various aircraft types such as DC9 and Airbus, but since the front wheel diameter of the Airbus wheels is much larger, the tractor shall be fitted with the device for automatic adjustment of the distance between rollers by means of the rod 35. This rod is positioned well above the wheels of an DC9 aircraft and may oscillate by means of arms hinged on a transverse axis. The swinging movement of the bars is triggering the microswitches 34 controlling the distributor 33 which in turn acts on the pistons 17 shifting the rotation centers of the rear rollers 8 backwards or forwards.

A similar operating diagram as illustrated in Fig.6 is used to operate the tractor shown in Fig.4 and 5 which is only used for towing DC9. This solution obviously does not include the transverse rod 35 since this tractor is not designed for towing other aircraft types.

## Claims

1. Tractor for towing aircraft by means of rollers (4, 8) acting on the front steering wheels (13) of the aircraft, these rollers being set in a fork-shaped recess (3) provided at the rear end of the tractor (1), which is fitted with a front operating cab and with driving and steering wheels (2) **characterized** by:
- two first motor-driven rollers (4) largely dimensioned mounted on a transverse axle (5) of the tractor in the front zone of the above recess (3) and supported by a lever (6) lengthwise oscillating about an axle parallel to said transverse axle (5) and actuated by a preloading hydraulic fluid powered piston (7);
- two second motor-driven rollers (8) largely dimensioned mounted on independent transverse axles in the rear zone of the recess (3) and separately rotating by means of arms (9) driven by hydraulic fluid powered pistons (10) and revolving on a vertical axis (11) from a central position (8), in which these rollers (8) rest on the rear end of the wheels of the aircraft, to a lateral position (8') and vice-versa;
- flat shaped surfaces (12) located in the internal face of each of these rollers (4, 8) for guiding and centering the aircraft wheels (13);
- means for positioning the aircraft wheel axle (13) on the same transverse vertical plane (X-X) as the rear wheels (2) of the tractor;
- tractor (1) operating and control devices (18 thru 39) for approaching the aircraft wheels (13) to the first front rollers (4), for closing the second rear rollers (8) against the aircraft wheels (13), for adjusting the contact pressure of the first and second rollers (4, 8) on variously sized aircraft wheels, for towing the aircraft and for hooking off the aircraft.

2. Tractor as described in claim 1, **characterized** in that the means for positioning of the aircraft wheel axles (13) and of the tractor rear wheels (2) on the same transverse vertical plane (X-X) is fitted on each side of the tractor (1) with a bar (14) to which the vertical pivoting axis (11) of the second rear roller (8) and the related piston (10) are secured; this bar (14) is moving lengthwise and is supported by traces (15, 16) actuated by a hydraulic fluid powered piston (17), whereby the second rollers (8) are separately adjustable in the distance with the first rollers (4).

3. Tractor as described in claim 2, **characterized** in that an oscillating transverse rod (35) defines the lengthwise movement of the bars (14), the axis (11) and of the related pistons (10) as well as the movement of the second rear rollers (8) based upon the aircraft wheel diameter (13).

4. Tractor as described in claim 1, **characterized** in that the operating and control devices are including:
- a variable displacement hydromotor (18) and its speed control lever (19);
- an oil tank (20) with cooling radiator (21);
- an oil gear pump (22);
- Pushbuttons (23, 24) controlling the distributor (25) actuating the single acting preloading piston (7) of the first front rollers (4);
- a nitrogen bell (26) connected to the above piston (7);
- a solenoid valve (27) adjusting the working pressure of the first front rollers (4);
- a red warning light (28) enabling operation of the tractor front wheels (2);
- a green warning light (29) enabling actuation of the rollers (4,8);
- pushbuttons (30, 31) activating the distributor (32) which controls the double acting pistons (10) with rotation of the second rear rollers (8);
- a distributor (33) operating the double acting pistons (17) moving the second rear rollers (8) lengthwise;
- micro-switches (34) operated by the oscillating bar (35) and connected to the distributor (33); the swinging movement of the bar (35) will automatically cause the new positioning of the second rollers (8) and the new distance between them, by means of the micro-switches (34), the distributior (33) and the pistons (17);
- a solenoid valve (36) connected by the pressure switch (37) to the warning lamps (28, 29) causing or preventing the actuation of the rollers (4,8);
- a solenoid valve (38) causing or preventing the operation of the tractor (1) wheels (2) enabled by micro-switches (39) actuated by the rotating movement of the arms (9) supporting the second rear rollers (8).

## Patentansprüche

1. Schleppfahrzeug zum Schleppen eines Flugzeuges durch Rollen (4, 8), die auf die vorderen steuernden Räder (13) des Flugzeuges wirken, wobei diese Rollen in einer gabelförmigen Ausnehmung (3) angeordnet sind, die an dem hinteren Ende des Schleppfahrzeuges (1) vorgesehen ist, das mit einer vorderen Steuerkabine und mit Antriebs- und Steuerrädern (2) ausgestattet ist, gekennzeichnet durch:
- zwei erste motorisch angetriebene Rollen (4), die gross dimensioniert an einer Querachse (5) des Schleppfahrzeuges im vorderen Bereich der Ausnehmung (3) befestigt sind und von einem Hebel (6) getragen werden, der in Längsrichtung um eine Achse parallel zu der Querachse (5) schwingt und durch einen vorspannenden, mit Hydraulikflüssigkeit angetriebenen Kolben (7) betätigt wird;
- zwei zweite motorisch angetriebene Rollen (8), die gross dimensioniert an unabhängigen Querachsen in dem hinteren Bereich der Ausnehmung (3) angeordnet sind und getrennt durch Arme (9) drehen, die von mit Hydraulikflüssigkeit angetriebenen Kolben (10) angetrieben werden, und auf einer senkrechten Achse (11) aus einer mittleren Position (8), in der diese Rollen (8) auf dem hinteren Ende der Räder des Flugzeuges aufliegen, in eine seitliche Position (8') und umgekehrt drehen;
- flachgeformte Oberflächen (12), die an der Innenseite jeder dieser Rollen (4, 8) angeordnet sind, um die Flugzeugräder (13) zu führen und zu zentrieren;
- Mittel zur Positionierung der Flugzeugradachse (13) auf derselben senkrechten Querebene (X-X) wie die hinteren Räder (2) des Schleppfahrzeuges;
- Bedienungs- und Steuervorrichtungen (18 bis 36) für das Schleppfahrzeug (1), um die Räder (13) des Flugzeuges an die ersten vorderen Rollen (4) anzunähern, die zweiten hinteren Rollen (8) gegen die Räder (13) des Flugzeuges zu schliessen, den Kontaktdruck der ersten und zweiten Rollen (4, 8) bei verschieden grossen Flugzeugrädern einzustellen, das Flugzeug zu schleppen und das Flugzeug abzukuppeln.

2. Schleppfahrzeug nach Anspruch 1, dadurch gekennzeichnet, dass das Mittel zum Positionieren der Flugzeugradachsen (13) und der hinteren Räder (2) des Schleppfahrzeuges auf derselben senkrechten Querebene (X-X) an jeder Seite des Schleppfahrzeuges (1) mit einem Stab (14) versehen ist, an dem die senkrechte Schwenkachse (11) der zweiten hinteren Rolle (8) und der zugehörige Kolben (10) befestigt sind; dieser Stab (14) sich in die Längsrichtung bewegt und von Schubstangen (15, 16) unterstützt wird, die durch einen mit Hydraulikflüssigkeit angetriebenen Kolben (17) betätigt werden, wobei die zweiten Rollen (8) getrennt voneinander in ihrem Abstand zu den ersten Rollen (4) eingestellt werden können.

3. Schleppfahrzeug nach Anspruch 2, dadurch gekennzeichnet, dass die schwingende Querstange (35) die Bewegung der Stäbe (14), der Achse (11) und der zugehörigen Kolben (10) in die Längsrichtung wie auch die Bewegung der zweiten hinteren Rollen (8) aufgrund des Durchmessers des Flugzeugrades (13) definiert.

4. Schleppfahrzeug nach Anspruch 1, dadurch gekennzeichnet, dass die Bedienungs- und Steuervorrichtungen folgendes umfassen:
- einen Verstellhydromotor (18) und seinen Geschwindigkeitssteuerhebel (19);
- einen Öltank (20) mit Kühlungsradiator (21);
- eine Ölzahnradpumpe (22);
- Tastschalter (23, 24), die den Verteiler (25) steuern, der den einfachwirkenden vorspannenden Kolben (7) der ersten vorderen Rollen (4) betätigt;
- eine Stickstoffglocke (26), die an den Kolben (7) angeschlossen ist;
- ein Magnetventil (27), das den Betriebsdruck der ersten vorderen Rollen (4) einstellt;
- ein rotes Warnlicht (28), das den Betrieb der vorderen Schleppfahrzeugräder (2) ermöglicht;
- ein grünes Warnlicht (29), das die Betätigung der Rollen (4, 8) ermöglicht;
- Tastschalter (30, 31), die den Verteiler betätigen, der die zweifachwirkenden Kolben zur Drehung der zweiten hinteren Rollen (8) steuert;
- einen Verteiler (33), der die zweifachwirkenden Kolben 17 zur Bewegung der zweiten hinteren Rollen (8) in die Längsrichtung betätigt;
- Mikroschalter (34), die durch den Schwingstab (35) betätigt werden und mit dem Verteiler (33) verbunden sind; die Schwingbewegung des Stabes (35) automatisch durch die Mikroschalter (34), den Verteiler (33) und die Kolben (17) die neue Positionierung der zweiten Rollen (8) und einen neuen Abstand zwischen ihnen bewirkt;
- ein Magnetventil (36), das durch den Druckschalter (37) mit den Warnlampen (28, 29) verbunden ist, um die Betätigung der Rollen (4, 8) auszulösen oder zu verhindern;
- ein Magnetventil (38), das den Betrieb der Räder (2) des Schleppfahrzeuges (1) veranlasst oder verhindert, das durch die Mikroschalter (39) betätigt wird, die durch die Drehbewegung der Arme (9), welche die zweiten hinteren Rollen (8) tragen, betätigt werden.

## Revendications

1. Véhicule tracteur pour le remorquage d'avion au moyen de rouleaux (4, 8) agissant sur les roues avant de direction (13) de l'avion, ces rouleaux étant placés dans un évidement (3) en forme de fourche situé à l'extrémité arrière du véhicule tracteur (1), lequel est équipé d'une cabine avant de chauffeur et de roues motrices et de direction (2) caractérisé par:
- un premier jeu de deux rouleaux (4) entraînés par un moteur et généreusement dimensionnés, montés sur un essieu transversal (5) du véhicule tracteur dans la partie avant de l'évidement (3) et soutenus par un levier (6) oscillant longitudinalement autour d'un essieu parallèle au dit essieu transversal (5) et actionné par un piston (7) de mise en précontrainte alimenté en fluide hydraulique;
- un second jeu de deux rouleaux (8) entraînés par un moteur et généreusement dimensionnés, montés sur des essieux transversaux indépendants dans la partie arrière de l'évidement (3) et tournant séparément au moyen de bras (9) entraînés par des pistons (10) alimentés en fluide hydraulique et effectuant une rotation autour d'un axe vertical (11) à partir d'une position centrale (8) dans laquelle ces rouleaux (8) reposent sur la partie arrière des roues de l'avion, vers une position latérale (8') et inversement;
- des surfaces de forme plane (12) situées sur la face interne de chacun des rouleaux (4, 8) pour le guidage et le centrage des roues (13) de l'avion;
- des moyens de positionnement de l'essieu des roues (13) de l'avion sur le même plan transversal vertical (X-X) que les roues arrière (2) du véhicule tracteur:
- des dispositifs de commande et d'actionnement (18 à 39) pour approcher les roues (13) de l'avion vers les rouleaux avant (4), pour fermer le second jeu de rouleaux arrière (8) contre les roues (13) de l'avion, pour régler la pression de contact des premier et second jeux de rouleaux (4, 8) sur les roues d'avion de différentes dimensions, pour le remorquage et le décrochage de l'avion.

2. Véhicule tracteur selon la revendication 1 **caractérisé** en ce que les moyens de positionnement des essieux des roues (13) de l'avion et des roues arrière (2) du véhicule tracteur sur le même plan transversal vertical sont équipés de chaque côté du véhicule tracteur (1) d'une barre (14) sur laquelle l'axe vertical pivotant (11) du second rouleau arrière (8) et le piston associe (10) sont fixés; cette barre (14) se déplace longitudinalement et est soutenu par des traces (15, 16) actionnées par un piston (17) alimenté en fluide hydraulique, l'écart entre le second jeu de rouleaux (8) et le premier jeu de rouleaux (4) étant réglable séparément.

3. Véhicule tracteur selon la revendication 2 **caractérisé** en ce qu'un barreau transversal oscillant (35) définit le mouvement longitudinal des barres (14), de l'axe (11) et des pistons associés (10) ainsi que le mouvement du second jeu de rouleaux arrière (8) en fonction du diamètre de roue (13) de l'avion.

4. Véhicule tracteur selon la revendication 1 **caractérisé** en ce que les dispositifs de commande et d'actionnement comportent:
- un moteur hydraulique à déplacement variable (18) et son levier régulateur de vitesse (19);
- un bac à huile (20) et son radiateur de refroidissement (21);
- une pompe à engrenages à huile (22)
- des boutons-poussoirs (23, 24) pour la commande du distributeur (25) actionnant le piston (7) à simple effet, lequel met les rouleaux avant (4) en précontrainte;
- une cloche à azote (26) reliée au piston (7);
- une électrovanne (27) pour le réglage de la pression de service des rouleaux avant (4);
- un signal avertisseur lumineux rouge (28) autorisant à actionner les roues (2) avant du véhicule tracteur,
- un signal avertisseur lumineux vert autorisant l'actionnement des rouleaux (4, 8);
- des boutons-poussoirs (30, 31) pour l'actionnement du distributeur (32) commandant les pistons (10) à double effet pour la rotation du second jeu de rouleaux arrière (8);
- un distributeur (33) actionnant les pistons (17)) à double effet pour le mouvement longitudinal des rouleaux arrière (8);
- des microrupteurs (34) actionnés par le barreau oscillant (35) et reliés au distributeur (33); le mouvement de bascule de ce barreau oscillant (35) provoquera automatiquement un repositionnement du deuxième jeu de rouleaux et un réajustement de l'écart les séparant par l'intermédiaire des microrupteurs (34), du distributeur (33) et des pistons (17);
- une électrovanne (36) reliée aux voyants avertisseurs lumineux (28, 29) par un mano-contact (37) pour déclencher ou bloquer l'actionnement des rouleaux (4, 8);
- une électrovanne (38) commandant les roues (2) du véhicule tracteur (1) autorisée par les microrupteurs (39), lesquels sont déclenchés par le mouvement de rotation des bras (9) soutenant le second jeu de rouleaux arrière (8).
